# EUROPEAN PATENT APPLICATION

(11) **EP 4 286 139 A1**
(43) Date of publication of application: **06.12.2023**
(21) Application number: 23740920.6
(22) Date of filing: 06.03.2023
(51) Int. Cl.: B29C 64/118, B33Y 40/00

(54) **CUTTING MECHANISM, PRINTHEAD ASSEMBLY AND THREE-DIMENSIONAL PRINTER**

(30) Priority: 18.04.2022 CN 202220895236 U
(71) Applicant: Shenzhen Anycubic Technology Co., Ltd., Shenzhen, Guangdong 518000 (CN)
(72) Inventor: LIAO, Qiming, Shenzhen, Gaungdong 518000 (CN)
(74) Representative: Haseltine Lake Kempner LLP
(86) International application number: PCT/CN2023/079835
(87) International publication number: WO 2023/202248

(57) **Abstract**

A cut-off mechanism, a print head assembly and a three-dimensional (3D) printer are provided. According to the cut-off mechanism provided by the present disclosures, a drive assembly drives a cutter assembly to move between a first position and a second position, the cutter assembly cuts off the consumable in the 3D printer, and then a consumable in the print head assembly is cut off by the cut-off mechanism when the the consumable is retracted, in order to ensure that the consumable can be smoothly retracted into a material replacement mechanism and to prevent a feeding channel from being blocked.

## Description

### CROSS REFERENCE TO THE RELATED APPLICATIONS

The present application is an application which is a national stage application of PCT International Application No. PCT/CN2023/079835, which is based upon and claims priority to Chinese Patent Applications No. 202220895236.6, filed on 18 April 2022, the entire contents of which are incorporated herein by reference.

### TECHNICAL FIELD

The present invention relates to the technical field of three-dimensional printers, in particular to a cut-off mechanism, a print head assembly and a three-dimensional printer.

### BACKGROUND

Three-dimensional (3D) printing, also referred as additive manufacturing, is rapid prototyping technology for constructing objects by means of layer-by-layer printing based on digital model files and using adhesive materials. 3D printers for manufacturing using a fused deposition modeling (FDM) process are the most widely used.

FDM consumables are generally thermoplastic materials, such as wax, acrylonitrile butadiene styrene (ABS) and nylon. The consumables are heated and melted in a nozzle, the nozzle extrudes the melted materials while moving along a sectional outline of a part and a filling trajectory, and the consumables quickly solidify and condense with surrounding materials to print a model.

However, when color change and consumable replacement are required for the FDM 3D printer, consumables near a heating block or the nozzle are likely to deform due to fusion, so consumables in a feeding channel are likely to be adhered to an inner wall of the feeding channel when being retracted, which results in blocking of the feeding channel and thus printing interruption or failures.

### SUMMARY

In view of this, the present disclosure provide a cut-off mechanism, a print head assembly and a three-dimensional (3D) printer. The cut-off mechanism is used to cut off a portion at a front end of a consumable in the print head assembly when the consumable is retracted, so as to ensure that the consumable can be smoothly retracted into a material replacement mechanism.

A first aspect of the present disclosures provides a cut-off mechanism, the cut-off mechanism applied to a 3D printer is configured to cut off a consumable. And the cut-off mechanism includes: a cutter assembly and a drive assembly. The cutter assembly is movable between a first position and a second position, the cutter assembly is configured to cut off the consumable in the 3D printer; and the drive assembly is connected to the cutter assembly and configured to drive the cutter assembly to move between the first position and the second position. When the cutter assembly is in the first position, the cutter assembly cuts off the consumable in the 3D printer, when the cutter assembly is in the second position, the cutter assembly is not in contact with the consumable in the 3D printer.

Further, the cutter assembly includes: a cutter and a sliding block, a first end of the cutter is connected to the sliding block, and a second end of the cutter is provided with a cutting edge; and the drive assembly abuts against the sliding block, and the drive assembly is configured to drive the sliding block to slide in a direction approaching the first position, so as to cause the cutting edge of the cutter to cut off the consumable in the 3D printer.

Further, the drive assembly includes: an eccentric wheel and a drive motor. A circumferential side of the eccentric wheel abuts against the sliding block; the drive motor has a drive shaft connected to the eccentric wheel, the drive motor is configured to drive the eccentric wheel to rotate, so as to force the sliding block to move in the direction approaching the first position.

Further, the cut-off mechanism further includes a reset assembly, the reset assembly abuts against the sliding block, and the reset assembly is configured to move the sliding block in a direction approaching the second position.

Further, the reset assembly includes: a guide portion, a fixed rod and a torsion spring. The guide portion is slidably connected to the sliding block; the fixed rod is fixedly connected to the guide portion; and the torsion spring is sleeved on the fixed rod, a first end of the torsion spring is fixedly connected to the guide portion, and a second end of the torsion spring abuts against the sliding block.

Further, the cut-off mechanism further includes a heating portion, the heating portion is connected to the cutter assembly, and the heating portion is configured to heat the cutter assembly.

Further, the sliding block is provided with a first through hole and a second through hole, and the heating portion includes: a heating rod and a thermistor. the heating rod is arranged in the first through hole configured to heat the sliding block; and the thermistor is arranged in the second through hole configured to monitor the temperature of the sliding block.

According to the cut-off mechanism provided by the present disclosures, the cutter assembly is driven by the drive assembly to move between the first position and the second position, the cutter assembly cuts off the consumable in the 3D printer, and thus when retracting the consumable in the print head, the 3D printer can first drive the cut-off mechanism provided in the embodiment above to cut off the consumable, in order to ensure that the consumable can be smoothly retracted into a material replacement mechanism and to prevent the problem that during retracting the consumable, a fused consumable close to a heating block is adhered to an inner wall of a feeding channel when moving to other positions in the feeding channel and thus the feed channel is blocked.

A second aspect of the present disclosures provide a print head assembly, where the print head assembly is applied to a 3D printer, and includes the cut-off mechanism as described above.

Further, the cut-off mechanism further includes a nozzle, a first connector, and a second connector, the first connector is provided with a first feeding channel; the second connector is provided with a second feeding channel, and the second connector is connected to the nozzle for supplying a consumable into the nozzle; the first feeding channel corresponds to the second feeding channel, and a cutter channel is formed between the first connector and the second connector; and the cutter channel is arranged corresponding to the cutter of the cutter assembly, the cutter channel is configured to guide the cutter of the cutter assembly to extend between the first feeding channel and the second feeding channel.

According to the print head assembly provided by the present disclosures, by adding the cut-off mechanism described above, a portion at the front end of the consumable in the print head assembly is cut off by the cut-off mechanism provided by the present disclosures when the consumable is retracted, so as to ensure that the consumable can be smoothly retracted into the material replacement mechanism.

A third aspect of the present disclosures provide a 3D printer including the print head assembly as described above.

According to the 3D printer provided by the present disclosures, by adding the cut-off mechanism as described above, a portion at a front end of a consumable in the print head assembly is cut off when the consumable is retracted, so as to ensure that the consumable can be smoothly retracted into a material replacement mechanism.

An objective and other advantages of the present disclosures can be achieved and obtained by structures particularly specified in the description and accompanying drawings.

The technical solutions of the present disclosures will be further described below in detail with reference to the accompanying drawings and in conjunction with embodiments.

### BRIEF DESCRIPTION OF THE DRAWINGS

The accompanying drawings are used for providing further understanding of the present disclosures and form part of the description, are intended to explain the present disclosures together with embodiments of the present disclosures, and shall not be considered as limitation to the present disclosures. In the figures:
FIG. 1 is a schematic structural diagram of a cut-off mechanism according to an exemplary embodiment of the present disclosures;
FIG. 2 is a schematic exploded diagram of a cut-off mechanism according to an exemplary embodiment of the present disclosures;
FIG. 3 is a schematic diagram showing that a consumable is cut by a cutting edge of a cutter according to an exemplary embodiment of the present disclosures;
FIG. 4 is a schematic diagram of a cutting edge of a cutter in a reset position according to an exemplary embodiment of the present disclosures;
FIG. 5 is a schematic diagram for resetting a cutting edge of a cutter by means of a reset assembly according to an exemplary embodiment of the present disclosures;
FIG. 6 is a schematic diagram illustrating application of an acting force by a reset assembly to a sliding block to move a cutter assembly to a second position according to an exemplary embodiment of the present disclosures;
FIG. 7 is a schematic structural diagram of a print head assembly according to an exemplary embodiment of the present disclosures;
FIG. 8 is a schematic structural diagram of another print head assembly according to an exemplary embodiment of the present disclosures;
FIG. 9 is a schematic diagram of a cutting edge of a cutter in a reset position according to an exemplary embodiment of the present disclosures;
FIG. 10 is a schematic diagram illustrating a consumable in a print head assembly cut off by a cut-off mechanism according to an exemplary embodiment of the present disclosures; and
FIG. 11 is a schematic diagram illustrating a free end of section B of a consumable approaching a bottom of a supply channel according to an exemplary embodiment of the present disclosures.

### Reference in the figures:

1: Cutter assembly, 101: Cutter, 102: Sliding block, 1021: First through hole, 1022: Second through hole;
2:Drive assembly, 201: Eccentric wheel, 202: Drive motor;
3: Consumable;
4:Reset assembly, 401: Guide portion, 402: Fixed rod, 403: Torsion spring;
5:Heating portion, 501: Heating rod, 502: Thermistor;
6: Supply channel, 601: First feeding channel, 602: Second feeding channel;
7: Cutter channel;
8:Nozzle.

### DETAILED DESCRIPTION OF THE EMBODIMENTS

In the description of the present disclosures, it should be understood that the orientation or position relationship indicated by the terms "central", " longitudinal", "transverse", "length", "width", "thickness", "upper", "lower", "front", "rear", "left", "right", "vertical", "horizontal", "top", "bottom", "inner", "outer", "clockwise", "counterclockwise", etc. are based on the orientation or position relationship as shown in the accompanying drawings and are intended to facilitate the description of the present disclosures and simplify the description only, rather than indicating or implying that the apparatus or element referred to must have a particular orientation or be constructed and operated in a particular orientation, and therefore cannot be understood as limiting the present disclosures.

In addition, the terms "first" and "second" are merely used for describing purposes and cannot be understood as indicating or implying relative importance, or implicitly indicating the number of indicated technical features. Therefore, the features defined with "first" and "second" can explicitly or implicitly include one or more features. In the description of the present disclosures, "a plurality of" means two or more, unless otherwise explicitly and specifically defined.

In the present disclosures, it should be noted that unless otherwise explicitly specified and defined, the terms such as "mounting", "connecting", "connection", and "fixation" should be understood in a broad sense, for example, can be a fixed connection, a detachable connection, or an integrated connection; may be a mechanical connection or an electrical connection; or may be a direct connection, an indirect connection via an intermediate medium, or internal communication between two elements. For those of ordinary skill in the art, specific meanings of the above terms in the present disclosures may be understood according to specific circumstances.

Preferred embodiments of the present disclosures will be described below with reference to the accompanying drawings. It should be understood that the preferred embodiments described herein are merely used for describing and explaining the present disclosures, rather than limiting the present disclosures.

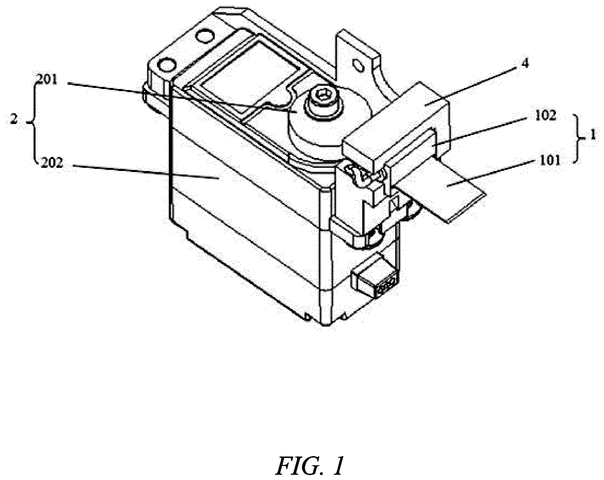

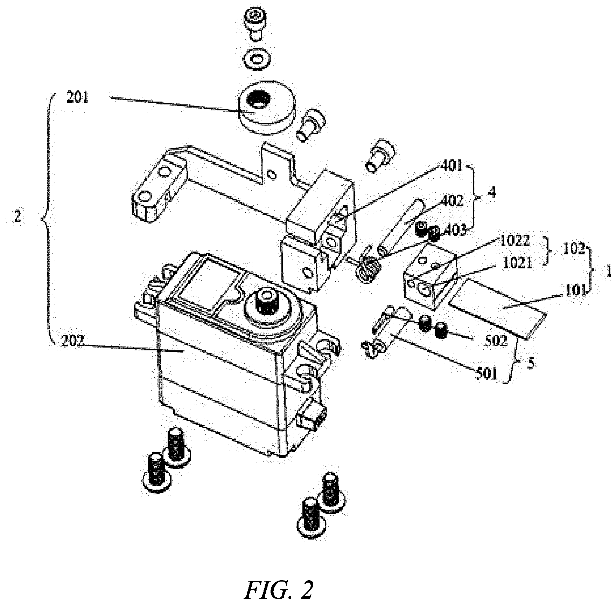

The present disclosures provide a cut-off mechanism applied to a three-dimensional (3D) printer. With reference to FIGS. 1-4, the cut-off mechanism is configured to cut off a consumable, and the cut-off mechanism includes: a cutter assembly 1 and a drive assembly 2. The cutter assembly 1 can move between a first position and a second position used to cut off a consumable 3 in the 3D printer. The drive assembly 2 is connected to the cutter assembly 1 used to drive the cutter assembly 1 to move between the first position and the second position. When the cutter assembly 1 is moving in the first position, the cutter assembly 1 cuts off the consumable 3 in the 3D printer, and when the cutter assembly 1 is moving in the second position, the cutter assembly 1 is not in contact with the consumable 3 in the 3D printer.

It may be understood that when the cutter assembly 1 is driven by the drive assembly 2 to move to the first position, the cutter assembly 1 is in contact with the consumable 3 and the cutter assembly 1 cuts off the consumable 3 in the 3D printer. When the cutter assembly 1 is driven by the drive assembly 2 to move to the second position, the cutter assembly 1 is reset and the cutter assembly 1 is not in contact with the consumable 3 in the 3D printer. Therefore, the consumable 3 is cut off when the drive assembly 2 drives the cutter assembly 1 to move from the second position to the first position, and the cutter assembly 1 is reset when the drive assembly 2 drives the cutter assembly 1 to move from the first position to the second position.

According to the cut-off mechanism provided by the present disclosures, the cutter assembly 1 is driven by the drive assembly to move between the first position and the second position, the cutter assembly 1 cuts off the consumable 3 in the 3D printer, and thus when retracting the consumable 3 in the print head, the 3D printer first drives the cut-off mechanism provided in the embodiment above to cut off the consumable 3, in order to ensure that the consumable 3 can be smoothly retracted into a material replacement mechanism and to prevent the problem that during retracting the consumable 3, a fused consumable close to a heating block moves to other positions in a feeding channel and is adhered to an inner wall of the feeding channel when the consumable 3 is retracted and thus a feeding channel is blocked.

In some implementations, the cutter assembly 1 includes a cutter 101 and a sliding block 102. A first end of the cutter 101 is connected to the sliding block 102, and a second end of the cutter 101 is provided with a cutting edge. The drive assembly 2 abuts against the sliding block 102, and the drive assembly 2 is configured to drive the sliding block 102 to slide in a direction approaching the first position, so as to cause the cutting edge of the cutter 101 to cut off the consumable 3 in the 3D printer.

Since the first end of the cutter assembly 1 is fixedly connected to the sliding block 102, the cutter 101 moves in the direction approaching the first position when the sliding block 102 is driven by the drive assembly to slide in the direction approaching the first position, and the cutting edge extends into the supply channel in the 3D printer to cut off the consumable 3 when the cutter assembly 1 moves to the first position.

In some implementations, with reference to FIGS. 1-4, the drive assembly 2 includes an eccentric wheel 201 and a drive motor 202. A circumferential side of the eccentric wheel 201 abuts against the sliding block 102. A drive shaft of the drive motor 202 is connected to the eccentric wheel 201, and the drive motor 202 is configured to drive the eccentric wheel 201 to rotate, so as to force, by the eccentric wheel 201, the sliding block 102 to move in the direction approaching the first position.

In the embodiment, the eccentric wheel 201 is a circular shape, a rotation center of the eccentric wheel 201 is connected to the drive shaft of the drive motor 202, and the rotation center of the eccentric wheel 201 does not coincide with a center of the circle, such that distances between the circumferential side of the eccentric wheel and the rotation center are unequal. Besides, since the circumferential side of the eccentric wheel 201 abuts against the sliding block 102, a distance between the sliding block 102 and the drive shaft is a distance between a position where the eccentric wheel 201 abuts against the sliding block 102 and the drive shaft. Therefore, when the drive motor 202 drives the eccentric wheel 201 to rotate, a circumferential position where the eccentric wheel 201 abut against the sliding block 102 is changing, such that the eccentric wheel 201 forces the sliding block 102, and the cutting edge of the cutter 101 extends into the supply channel of the 3D printer to cut off consumable. A maximum distance between the rotation center of the eccentric wheel 201 and the circumferential side of the eccentric wheel 201 is W1, a minimum distance between the rotation center of the eccentric wheel 201 and the circumferential side of the eccentric wheel 201 is W2, and an interval of displacement of the cutting edge of the cutter 101 under the driving effect of the eccentric wheel 201 is between W1 and W2, thus ensuring that the cutting edge of the cutter 101 cuting off the consumable 3 when the sliding block 102 is driven by the eccentric wheel 201.

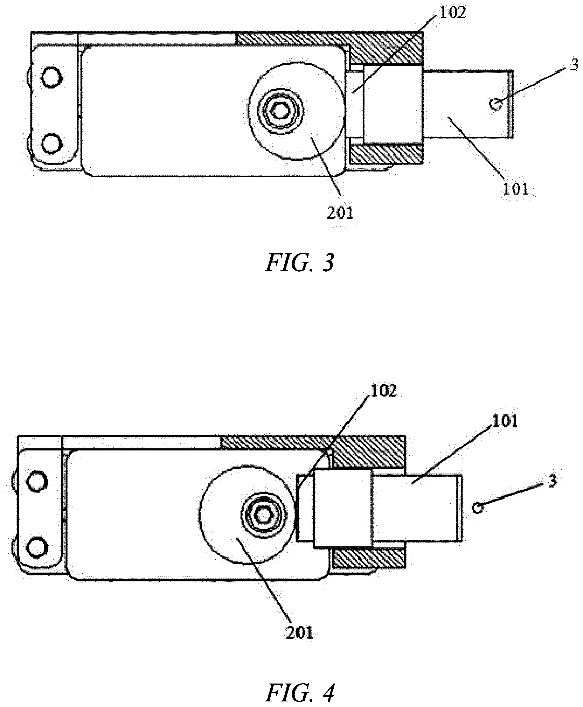

Specifically, when the drive motor 202 drives the eccentric wheel 201 to rotate to a position as shown in FIG. 4, the distance between the position where the eccentric wheel 201 abuts against the sliding block 102 and the rotation center of the eccentric wheel 201 is W2, and the cutter assembly 1 is in the second position, that is, the cutting edge of the cutter 101 is not in contact with the consumable in the 3D printer. When the cutter assembly 1 is in the second position, the distance W between the position where the eccentric wheel 201 abuts against the sliding block 102 and the rotation center of the eccentric wheel 201 is less than W1, but not limited to W2, that is, W2 ≤ W < W1, and is specifically determined according to a distance by which the cutter moves from the second position to the first position. When the drive motor 202 drives the eccentric wheel 201 to rotate to a position as shown in FIG. 3, the distance between the position where the eccentric wheel 201 abuts against the sliding block 102 and the rotation center of the eccentric wheel 201 is W1, and the cutter assembly 1 is in the first position, that is, the cutting edge of the cutter 101 extends into the supply channel of the 3D printer to cut off the consumable 3. In order to ensure that the cutter assembly 1 may completely cut off the consumable 3, when the eccentric wheel 201 rotates to the position where the eccentric wheel abuts against the sliding block 102 and the distance to the rotation center is W1, a projection of the consumable 3 coincides with a projection of the cutter 101 in a feeding direction. According to this embodiment, the drive motor 202 controls the rotation of the eccentric wheel 201, and the eccentric wheel 201 forces the cutter assembly 1 to the first position, such that the cutter 101 cut off the consumable 3.

In some preferred embodiments, the drive motor 202 includes a servo, and a rotary shaft of the servo is detachably and fixedly connected to the eccentric wheel 201. Since the servo is a position (herein, the position may also be an angle) servo driver, the servo is suitable for a control system that requires continuous angular variation and maintaining of an angle. The eccentric wheel 201 in this embodiment is provided with a toothed ring in fitted connection with the rotary shaft of the servo, facilitating the detachable and fixed connection of the eccentric wheel 201 and the rotary shaft of the servo.

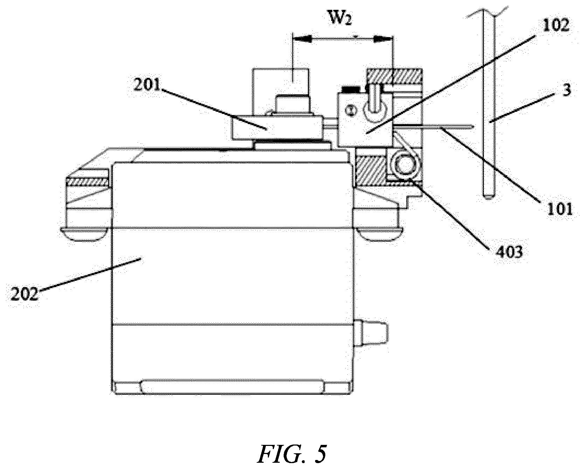

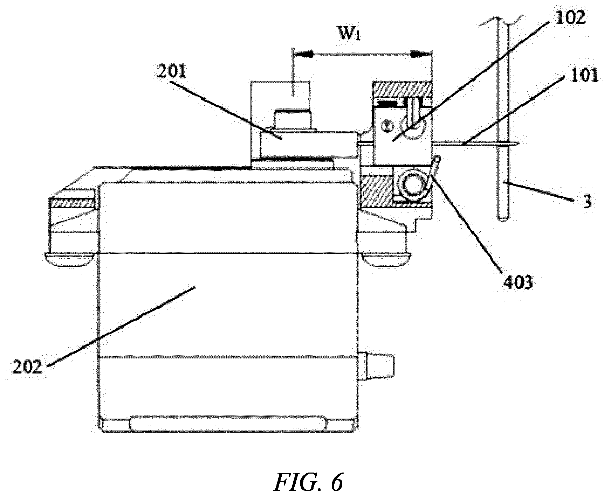

In some other embodiments, with reference to FIGS. 5 and 6, the cut-off mechanism further includes a reset assembly 4. The drive assembly 4 abuts against the sliding block 102, and the drive assembly 4 is configured to move the sliding block 102 in a direction approaching the second position.

The reset assembly 4 applies an acting force to the sliding block 102 to cause the sliding block 102 to drive the cutting edge of the cutter 101 to move towards the second position, so as to move the sliding block 102 in the direction approaching the second position.

When the distance between the position where the eccentric wheel 201 abuts against the sliding block 102 and the rotation center changes from W1 to W2, under the force applied by the reset assembly 4, the sliding block 102 moves towards the second position, the cutter 101 is driven to move towards the second position while the sliding block 102 is kept abutting against the eccentric wheel 201, thereby facilitating performance of a next cutting task. By means of the reset assembly 4 according to this embodiment, after the cutting edge of the cutter 101 cuts off the consumable 3 in the first position, the cutting edge of the cutter is reset to the second position under the action of the reset assembly.

Specifically, the reset assembly 4 includes a guide portion 401, a fixed rod 402 and a torsion spring 403. The guide portion 401 is slidably connected to the sliding block 102. The fixed rod 402 is fixedly connected to the guide portion 401. The torsion spring 403 is sleeved on the fixed rod 402. A first end of the torsion spring 403 is fixedly connected to the guide portion 401, and a second end of the torsion spring 403 abuts against the sliding block 102.

The torsion spring 403 is fixedly connected to the guide portion 401 at the first end, and abuts against the sliding block 102 at the second end, such that the second end of the torsion spring 403 moves with the sliding block, and the deformation of the torsion spring 403 changes accordingly. When the eccentric wheel 201 rotates to the position where the eccentric wheel abuts against the sliding block 102, the distance to the rotation center is W1, a relative distance between the rotation center of the eccentric wheel 201 and the sliding block 102 is W1, the cutter assembly 1 is in the first position, the cutting edge of the cutter 101 cuts off the consumable 3, and the force applied by the sliding block 102 to the second end of the torsion spring 403 causes the maximum deformation of the torsion spring 403. When the eccentric wheel 201 rotates to a position where the eccentric wheel abuts against the sliding block 102, a distance to the rotation center is W2, due to the property of restoration from deformation of the torsion spring 403, the force generated by the restoration from deformation of the torsion spring 403 is applied to the sliding block 102 via the second end of the torsion spring to push the sliding block 102 towards the eccentric wheel 201, it causes the sliding block 102 abut against the circumferential side of the eccentric wheel 201. In this case, the cutter assembly 1 is in the second position, the deformation of the torsion spring 403 is at minimum, a relative distance between the rotation center of the eccentric wheel 201 and the sliding block 102 is W2. Through the torsion spring 403 according to this embodiment, the torsion spring is fixedly connected to the guide portion 401 at the first end, and abuts against the sliding block 102 at the second end, such that the cutter assembly 1 is reset by using the force resulting from the restoration from deformation of the torsion spring 403. A simple and ease of use structure is provided.

Specifically, the guide portion 401 is a guide slot, and the cutter assembly 1 reciprocates on a plane where the first position and the second position are located when the sliding block 102 is under a guidance of the guide slot. The guide slot is arranged in a mount, the mount can be connected to the top of the servo by means of bolts, and the mount can also integrally fix the cut-off mechanism on a support for fixing a nozzle by means of bolts.

In some other implementations, the cut-off mechanism further includes a heating portion 5. The heating portion 5 is connected to the cutter assembly 1. The heating portion 5 is configured to heat the cutter assembly 1.

The sliding block 102 can be made of metal, and the heating portion 5 is arranged in the sliding block 102 for heating the cutter 101 through the sliding block 102. The heating portion 5 is arranged in the sliding block 102 and is in direct contact with the sliding block 102, and the sliding block 102 is also in direct contact with the cutter 101. Since the sliding block 102 is made of the metal and has a desirable heat-conducting property, heat generated by the heating portion 5 can be conducted to the cutter 101 through the sliding block 102 when the heating portion 5 operates, so as to heat the cutter 101 at a preset temperature. Alternatively, the heating portion 5 can also be in direct contact with the cutter 101 to directly heat the cutter 101. For example, the preset temperature can be 80°C. For example, the sliding block 102 can be made of aluminum, iron or copper. According to this embodiment, the consumable is hot-fusible, and is easier to cut by the cutter 101 after the cutter 101 is heated.

Specifically, the sliding block 102 can be provided with a first through hole 1021 and a second through hole 1022. The heating portion 5 includes a heating rod 501 and a thermistor 502. The heating rod 501 is arranged in the first through hole 1021, and the heating rod 501 is configured to heat the sliding block 102. The thermistor 502 is arranged in the second through hole 1022. The thermistor 502 is configured to monitor the temperature of the sliding block 102 to prevent excess heating temperature. According to this embodiment, the heating portion 5 can be stored in the sliding block 102, thereby reducing an overall size of the cut-off mechanism.

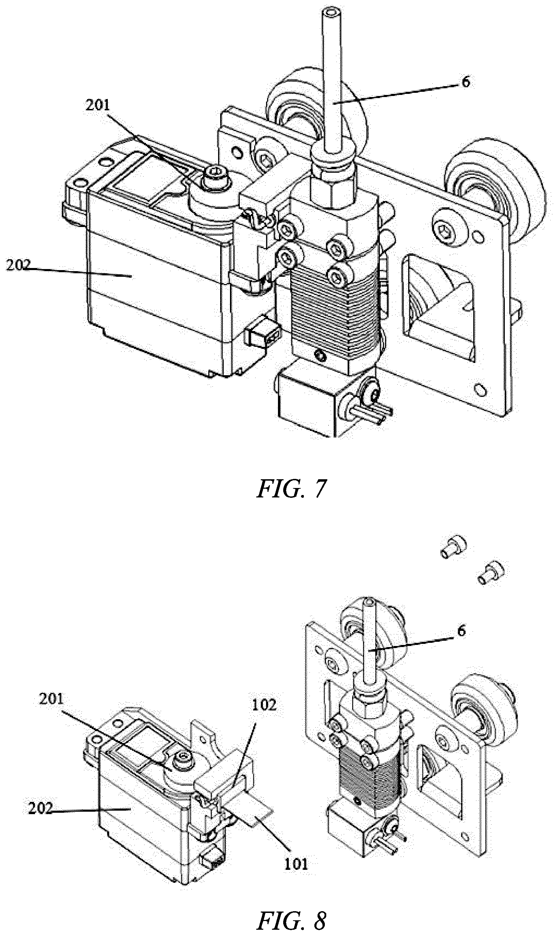

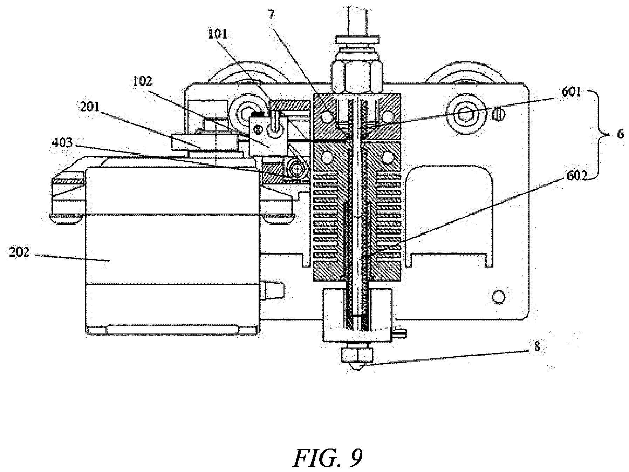

The present disclosures further provide a print head assembly applied to a 3D printer. With reference to FIGS. 7-10, the print head assembly is the cut-off mechanism according to the embodiment as described above.

In some implementations, the print head assembly further includes a nozzle 8, a first connector, and a second connector. The first connector is provided with a first feeding channel 601; the second connector is provided with a second feeding channel 602, and the second connector is connected to the nozzle 8 for supplying a consumable 3 into the nozzle 8; the first feeding channel 601 corresponds to the second feeding channel 602, and a cutter channel 7 is formed between the first connector and the second connector; and the cutter channel 7 is arranged corresponding to a cutter 101 of a cutter assembly 1, the cutter channel 7 is configured to guide the cutter 101 of the cutter assembly 1 to extend between the first feeding channel 601 and the second feeding channel 602.

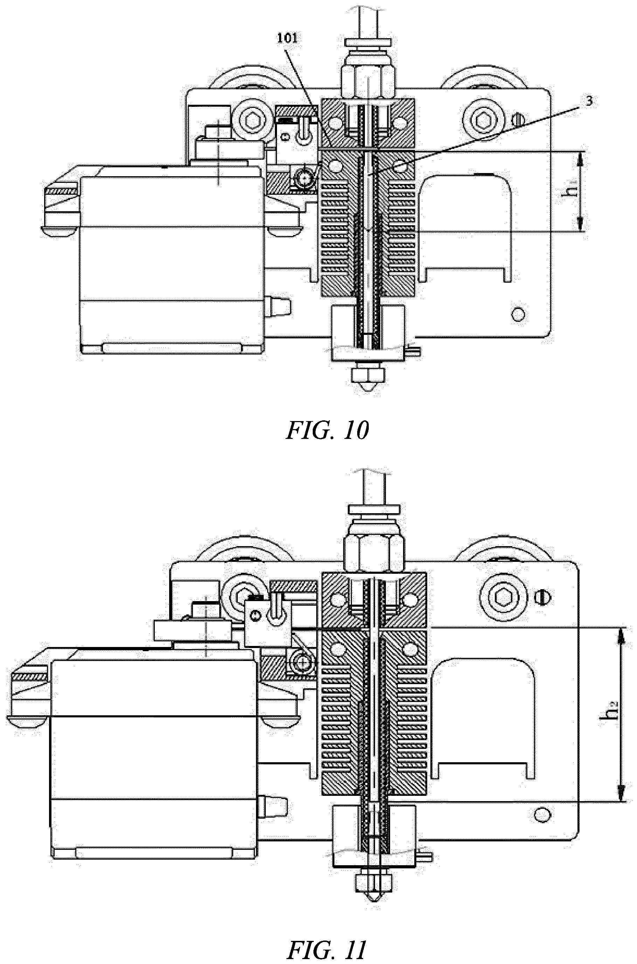

According to the print head assembly provided by the present disclosures, by adding the cutter channel 7 and the cut-off mechanism as described above, the cutter 101 of the cutter assembly 1 is driven by the drive assembly 2 on the cut-off mechanism to move in the cutter channel 7, and the cutter 101 is guided to extend between the first feeding channel 601 and the second feeding channel 602, and thus the consumable 3 located in the first feeding channel 601 and the second feeding channel 602 is cut off by a cutting edge of the cutter 101. If the consumable 3 with a length of h1 in FIG. 10 is cut off, a portion at a front end of the consumable 3 is cut off by the cut-off mechanism provided by the present disclosures when the consumable 3 in the print head assembly is retracted, so as to ensure smooth retraction of the consumable 3 into a material replacement mechanism.

In some implementations, the supply channel 6 includes a first feeding channel 601 and a second feeding channel 602, the first feeding channel 601 is arranged corresponding to the second feeding channel 602, and the cutter channel 7 is located between the first feeding channel 601 and the second feeding channel 602 in a feed direction. When the cutter assembly 1 is in the first position, the cutter 101 extends between the first feeding channel 601 and the second feeding channel 602, and in this case, the cutter 101 is in a cut-off position. When the cutter assembly 1 is in the second position, the cutter 101 exits from between the first feeding channel 601 and the second feeding channel 602, and in this case, the cutter 101 is in a reset position. The first feeding channel 601 is located above the cutter channel 7, and the second feeding channel 602 is connected to the nozzle.

The present disclosures further provide a 3D printer, including the print head assembly according to the embodiment as described above.

According to the 3D printer provided by the present disclosures, by adding the cut-off mechanism as described above, a portion at a front end of a consumable 3 in the print head assembly is cut off when the consumable is retracted, so as to ensure that the consumable 3 can be smoothly retracted into a material replacement mechanism.

In some implementations, the 3D printer further includes the material replacement mechanism and a control assembly. The material replacement mechanism is configured to place a consumable 3 to be replaced into a first feeding channel 601 and the second feeding channel 602. The material replacement mechanism is also configured to retract the consumable 3 cut by the cutter 101. The control assembly is configured to control the material replacement mechanism to retract the consumable 3 after the consumable 3 is cut off by the cutter 101.

With reference to FIG. 10, a cut-off consumable 3 is assumed to be a section A of the consumable 3, and a consumable 3 connected to the material replacement mechanism is assumed to be a section B of the consumable 3. After the section A of the consumable 3 is cut off by the cutter 101, the material replacement mechanism pushes section B of the consumable 3 into the second feeding channel 602, and the section B of the consumable 3 pushes the section A of the consumable 3, such that the section A of the consumable 3 moves towards the nozzle 8 in a length direction of the second feeding channel 602 until the section A of the consumable 3 completely enters a heating block of the print head assembly, and then the section B of the consumable 3 is retracted from the second feeding channel 602 and the first channel 601 through the material replacement mechanism, as shown in FIG. 11. Here, by moving the section B of the consumable 3 in the length direction of the second feeding channel 602 through the material replacement mechanism, the cut-off section A of the consumable 3 is pushed to move towards the nozzle 8 by the section B of the consumable 3, and thus it can prevent the second channel 602 from being blocked by the cut-off section A of the consumable 3. It also can prevent a free end of the section B of the consumable from being heated, softened and expanded by the heating block of the print head assembly when the section of the consumable 3 is retracted by the material replacement mechanism, thus preventing the problem that section B of the consumable 3 fuses and gets adhered to an inner wall of the supply channel 6 to block the feed channel.

In addition, when the material replacement mechanism of the 3D printer enters a material replacement procedure, after the consumable 3 to be replaced is delivered to the supply channel 6, the consumable needs to be extruded forwards by a certain distance, such that the original consumable 3 of the section A of the consumable 3 is extruded from the print head assembly to clear the section A of the consumable 3 before printing with the replaced consumable 3 is resumed.

Apparently, those skilled in the art can make various modifications and variations to the present disclosures without departing from the spirit and scope of the present disclosures. As such, if these modifications and variations of the present disclosures fall within the scope of the claims of the present disclosures and their equivalents, it is intended that the present disclosures encompasses these modifications and variations.

## Claims

1. A cut-off mechanismapplied in a three-dimensional (3D) printer, configured to cut off a consumable, wherein the cut-off mechanism (00) comprises:
a cutter assembly movable between a first position and a second position and configured to cut off the consumable in the 3D printer; and
a drive assembly connected to the cutter assembly and configured to drive the cutter assembly to move between the first position and the second position, wherein the cutter assembly in the first position cuts off the consumable in the 3D printer, and the cutter assembly in the second position is not in contact with the consumable in the 3D printer.

2. The cut-off mechanism according to claim 1, wherein the cutter assembly comprises: a cutter and a slide block;
wherein a first end of the cutter is connected to the sliding block, and a second end of the cutter is provided with a cutting edge; and
the drive assembly abuts against the sliding block, and is configured to drive the sliding block to slide in a direction approaching the first position, so as to cause the cutting edge of the cutter to cut off the consumable in the 3D printer.

3. The cut-off mechanism according to claim 2, wherein the drive assembly comprises:
an eccentric wheel, wherein a circumferential side of the eccentric wheel abuts against the sliding block; and
a drive motor, wherein the drive motor has a drive shaft connected to the eccentric wheel is configured to drive the eccentric wheel to rotate, so as to force the sliding block to move in the direction approaching the first position.

4. The cut-off mechanism according to claim 2, further comprising a reset assembly, wherein the reset assembly abuts against the sliding block, and is configured to move the sliding block in a direction approaching the second position.

5. The cut-off mechanism according to claim 4, wherein the reset assembly comprises:
a guide portion slidably connected to the sliding block;
a fixed rod fixedly connected to the guide portion; and
a torsion spring sleeved on the fixed rod, wherein a first end of the torsion spring is fixedly connected to the guide portion, and a second end of the torsion spring abuts against the sliding block.

6. The cut-off mechanism according to claim 2, further comprising a heating portion, wherein the heating portion is connected to the cutter assembly, and is configured to heat the cutter assembly.

7. The cut-off mechanism according to claim 6, wherein the sliding block is provided with a first through hole and a second through hole, and the heating portion comprises:
a heating rod arranged in the first through hole configured to heat the sliding block; and
a thermistor arranged in the second through hole configured to monitor the temperature of the sliding block.

8. A print head assembly applied in a 3D printer, wherein the print head assembly comprises a cut-off mechanism according to any one of claims 1-7.

9. The print head assembly according to claim 8, further comprising a nozzle, a first connector, and a second connector, wherein
the first connector is provided with a first feeding channel;
the second connector is provided with a second feeding channel, and the second connector is connected to the nozzle for supplying a consumable into the nozzle;
the first feeding channel corresponds to the second feeding channel, and a cutter channel is formed between the first connector and the second connector; and
the cutter channel is arranged corresponding to the cutter of the cutter assembly, and is configured to guide the cutter of the cutter assembly to extend between the first feeding channel and the second feeding channel.

10. A 3D printer, comprising a print head assembly according to claim 9.
